# EUROPÄISCHE PATENTANMELDUNG

(11) **EP 2 369 543 A1**
(43) Veröffentlichungstag der Anmeldung: **28.09.2011**
(21) Anmeldenummer: 10075089.2
(22) Anmeldetag: 26.02.2010
(51) Int. Cl.: G06Q 20/00

(54) **Mobiles elektronisches Gerät mit Authentifizierungsfunktion zur Nutzung transaktionsbasierter Dienste und dieses umfassendes System**

(71) Anmelder: Deutsche Telekom AG, 53113 Bonn (DE)
(72) Erfinder: Ren, Zhiyun, 12357 Berlin (DE); Heuer Jörg, 14163 Berlin (DE); Yin, Ming, 12203 Berlin (DE); Steffens Ernst-Joachim, 13089 Berlin (DE); Hofmann Klaus-Peter, 12205 Berlin (DE)
(74) Vertreter: Drosch, Ulrich

(57) **Zusammenfassung**

Die Erfindung betrifft ein mit einer Steuereinrichtung ausgestattetes mobiles elektronisches Gerät (1) mit Authentifizierungsfunktion zur Nutzung transaktionsbasierter Dienste, welches über eine mit einer SIM-Karte (2) nutzbare Mobilfunksende- und Empfangseinheit verfügt oder mit einer solchen Mobilfunksende- und Empfangseinheit koppelbar ist. Erfindungsgemäß sind auf der SIM-Karte (2) beziehungsweise der UICC des Gerätes (1) mehrere Anwendungen (3) zur Nutzung unterschiedlicher transaktionsbasierter Dienste und/oder zur Nutzung der Dienste unterschiedlicher Dienstanbieter hinterlegbar. Auf der SIM-Karte (2) hinterlegte Anwendungen (3) werden durch eine ebenfalls auf der SIM-Karte (2) gehaltene Managementkomponente (4) verwaltet. Im Zusammenwirken mit einer von der Steuereinrichtung des Gerätes (1) verarbeiteten Software ermöglicht die Managementkomponente (4) außerdem einem Benutzer des Geräts (1) über mindestens ein Benutzerinterface die Auswahl einer Anwendung (3) zur Nutzung eines transaktionsbasierten Dienstes. Sie steuert ferner während einer unter Nutzung dieses Dienstes ausgeführten Transaktion die über eine NFC-Schnittstelle des Gerätes erfolgende Kommunikation der jeweils ausgewählten Anwendung (3) mit einer dafür ausgebildeten, die Transaktion mit Backendeinrichtungen des entsprechenden Dienstanbieters abwickelnden Einrichtung (5).

## Beschreibung

Die Erfindung betrifft ein mobiles elektronisches Gerät mit Authentifizierungsfunktion zur Nutzung transaktionsbasierter Dienste. Gemäß einer besonders bevorzugten Ausbildungsform der Erfindung bezieht dieses eine Bezahlfunktion zur Nutzung eines transaktionsbasierten bargeldlosen Zahlungsverkehrs ein, wobei das Gerät zur Authentifizierung gegenüber einem Zahlungsdienstleister beziehungsweise gegenüber dessen Backendeinrichtungen dient. Dabei ist das Gerät speziell für die bargeldlose Bezahlung an einer entsprechenden, für die Kommunikation mit dem Gerät ausgebildeten Kasseneinrichtung am Point-of-Sale (POS) konzipiert und vorzugsweise als ein Mobiltelefon beziehungsweise Smartphone mit Bezahlfunktion ausgebildet. Darüber hinaus betrifft die Erfindung ein System zur Bereitstellung und Nutzung transaktionsbasierter Dienste, welches ein entsprechendes mobiles elektronisches Gerät umfasst. Auch hierbei bezieht sich eine Ausbildungsform der Erfindung auf ein System des bargeldlosen Zahlungsverkehrs. Im Hinblick auf die bevorzugte Ausbildung der Erfindung, sowohl in Gestalt des beanspruchten mobilen Gerätes, als auch in Form des entsprechenden Systems beziehen sich die nachfolgenden Darstellungen, insbesondere auch die Ausführungen zum Stand der Technik, hauptsächlich auf den Bereich des transaktionsbasierten bargeldlosen Zahlungsverkehrs, ohne dass die Erfindung jedoch hierauf beschränkt wäre, worauf an geeigneter Stelle durch entsprechende Hinweise auch nochmals eingegangen wird.

Das Prinzip des bargeldlosen Zahlungsverkehrs mit der Möglichkeit einer bargeldlosen Bezahlung auch vor Ort, das heißt am Point-of-Sale, ist seit Langem bekannt und bereits auf breiter wirtschaftlicher Basis etabliert. Hierbei kommen vor allem EC-Karten beziehungsweise Bank-Chipkarten und Kreditkarten zum Einsatz, deren Benutzung von modernen Kasseneinrichtungen nahezu aller Verkaufsstellen unterstützt wird. Die entsprechenden Kasseneinrichtungen sind hierzu bekanntermaßen mit Lesegeräten ausgestattet, in welche die jeweilige Chip-Karte oder Kreditkarte zum Auslesen zahlungsrelevanter Daten von einem Magnetstreifen und/oder aus einem Kartenchip eingeführt werden. Nach dem Auslesen der entsprechenden Daten und einer Bestätigung des zugrunde liegenden Kaufvorgangs durch den Kartenbenutzer erfolgt die jeweilige Transaktion zur Durchführung eines bargeldlosen Bezahlvorgangs über eine Datenverbindung der betreffenden Kasseneinrichtung mit dem so genannten Backend, das heißt technischen Einrichtungen eines Zahlungsdienstleisters als Bereitsteller des für die Bezahlung genutzten Bezahlsystems. Diese bekannte Art des bargeldlosen Zahlungsverkehrs setzt seitens der zahlenden Kunden die Mitführung eines speziellen Tokens, wie der bereits erwähnten Bank-Chipkarte oder Kreditkarte voraus, dessen Bereitstellung in den erforderlichen großen Stückzahlen für die Betreiber entsprechender Bezahlsysteme beziehungsweise für die Zahlungsdienstleister mit teilweise nicht unerheblichen Kosten verbunden ist. Für den Benutzer, also den Kunden, ergibt sich der Nachteil, dass er häufig, im Hinblick auf unterschiedliche von ihm genutzte Bezahlsysteme, nämlich wirtschaftlich unterschiedliche ausgestaltete Bezahlsysteme, wie Prepaid-Systeme, Postpaid-Systeme oder Kreditkarten-Systeme, aber auch im Hinblick auf wirtschaftlich vergleichbare Bezahlsysteme unterschiedlicher Zahlungsdienstleister, eine Mehrzahl von entsprechenden Token beziehungsweise Karten für den elektronischen Zahlungsverkehr mit sich führen muss. Entsprechendes gilt für andere mittels Magnet- oder Chipkarten zur Authentifizierung nutzbare transaktionsbasierte Dienste.

Der hohe Grad der Penetration der Bevölkerung mit Mobilfunkgeräten und der technische Fortschritt, welcher eine starke Ausweitung der Funktionalität solcher Mobilfunkgeräte bewirkt hat, haben zu der Überlegung geführt, zum Beispiel den bargeldlosen Zahlungsverkehr unter Einsatz der von den Kunden ohnehin zumeist mitgeführten Mobilfunkgeräte zu ermöglichen. In diesem Zusammenhang sind bereits mehrere Lösungen vorgeschlagen worden, welche auf einer Kommunikation eines für die bargeldlose Bezahlung verwendeten Mobiltelefons mit einem entsprechend ausgebildeten Kassenterminal am Point-of-Sale unter Nutzung einer NFC-Schnittstelle (NFC = Near Field Communication), das heißt einer Funkschnittstelle für die Nahbereichskommunikation, beruhen. Ansätze hierfür sind insbesondere im Zusammenhang mit dem Ticketkauf beim öffentlichen Personenverkehr oder für Kulturveranstaltungen bekannt geworden. Soweit darüber hinaus Lösungen bekannt geworden sind, bei welchen Mobiltelefone unter Nutzung eines von einem Kreditkartenanbieter bereitgestellten Bezahlsystems verwendet werden, sind diese Lösungen jedoch nach dem Stand der Technik im Allgemeinen proprietär. Eine entsprechende Lösung wird beispielsweise in der US 2009/0239512 A1 beschrieben. Die in der Druckschrift beschriebene Lösung betrifft eine offenbar proprietäre Lösung, welche einerseits am Point-of-Sale die bargeldlose Bezahlung mittels Mobiltelefon und unter Nutzung des Bezahlsystems des entsprechenden Kreditkartenausgebers beziehungsweise Zahlungsdienstleisters und andererseits den Erwerb von Fahrkarten im öffentlichen Personenverkehr ermöglicht. Hierfür wird ein entsprechendes Mobilfunkgerät beziehungsweise Handy mit einer zusätzlichen Smartcard ausgestattet.

Weitere Lösungen für die Benutzung von Mobiltelefonen zur bargeldlosen Bezahlung sind ferner beispielsweise durch die DE 10 2007 006 659 A1 und die DE 10 2007 005 427 A1 bekannt geworden. Dabei betrifft die erstgenannte Druckschrift eine Lösung, welche gewissermaßen für den unmittelbaren Bargeldersatz konzipiert wurde und im Falle einer entsprechenden bargeldlosen Bezahlung die unmittelbare Abbuchung des Zahlungsbetrages von einem Konto des Käufers sowie die Überweisung dieses Betrages auf ein Bankkonto des Verkäufers vorsieht. Hierzu muss zum Zeitpunkt der Bezahlung beziehungsweise während der Durchführung des Bezahlvorgangs sowohl zwischen dem vom Käufer benutzten Mobilfunkgerät und dem kontoführenden Institut des Käufers als auch zwischen der Kasseneinrichtung des Verkäufers und dessen kontoführendem Institut eine Datenverbindung, also eine WAN-Verbindung leitungsgebunden oder über Funk bestehen. Gemäß der Lösung nach der DE 10 2007 005 427 A1 liest ein zur bargeldlosen Bezahlung benutztes Mobilfunkgerät zur Durchführung des Bezahlvorgangs einen RFID-Take der am Point-of-Sale verwendeten Kasseneinrichtung aus, verknüpft diese Daten mit einer Kreditkarteninformation und übermittelt die solchermaßen verknüpften Daten über das Mobilfunknetz an die Bank des Kunden, welche an die Kasseneinrichtung des Verkäufers eine Bestätigung über den Zahlvorgang übermittelt. Auch die beiden zuletzt beschriebenen Lösungen sind demnach weitgehend proprietär, aber jedenfalls im Hinblick auf die Flexibilität des Kunden bezüglich der Nutzung unterschiedlicher Bezahlsysteme eher eingeschränkt. Sie sind zudem teilweise aufwändig und erfordern eine neue spezielle Infrastruktur.

Aufgabe der Erfindung ist es, eine Lösung bereitzustellen, welche eine flexible Nutzung unterschiedlicher transaktionsbasierter Dienste, vorzugsweise insbesondere unterschiedlicher Bezahlsysteme beziehungsweise der Bezahlsysteme unterschiedlicher Zahlungsdienstleister im Zusammenhang mit der Verwendung eines mobilen elektronischen Geräts, wie vorzugsweise insbesondere eines Mobiltelefons, ermöglicht. Dabei soll die entsprechende Lösung einfach auf vorhandene Systeme aufsetzbar sein und gleichzeitig ein hohes Maß an Sicherheit bei der Durchführung der Transaktionen, insbesondere von Zahlungstransaktionen garantieren.

Im Zusammenhang mit der vorgenannten Aufgabenstellung und den nachfolgenden Erläuterungen zur Lösung dieser Aufgabe ist zwischen dem erfindungsgemäßen System (begrifflich als "System" in Alleinstellung gebraucht), als einem physischen, aus entsprechenden hard- und softwarebasierten Einheiten bestehenden System und zwischen Bezahlsystemen, als zwar ebenfalls mittels solcher Einheiten realisierten, aber eher unter logischen Gesichtspunkten, nach den dahinter stehenden wirtschaftlichen Konzepten für die Zahlungsabwicklung zu differenzierenden Systemen zu unterscheiden ist. So wird im Hinblick auf die Bezahlsysteme zum Beispiel zwischen Prepaid-Systemen, Postpaid-Systemen und Kreditkartensystemen unterschieden, wobei sich zum Beispiel letztere wiederum für verschiedene Anbieter (Kreditkartenausgeber) beziehungsweise Zahlungsdienstleister möglicherweise in ihrer wirtschaftlichen Ausgestaltung, aber jedenfalls bezüglich der zu ihrer Nutzung jeweils erforderlichen Art der Authentifizierung unterscheiden. Bezüglich der Nutzung transaktionsbasierter Dienste allgemein hebt die Erfindung dabei neben Diensten beziehungsweise Systemen des bargeldlosen Zahlungsverkehrs insbesondere auf transaktionsbasierte Dienste ab, die nach dem Stand der Technik unter Verwendung spezieller der Authentifizierung dienender Karten, wie beispielsweise Loyalty Cards, Zutrittskarten, Eintrittskarten, ÖPNV-Tickets oder Signaturkarten, nutzbar sind.

Die zuvor angegebene Aufgabe wird durch ein mobiles elektronisches Gerät mit den Merkmalen des Patentanspruchs 1 gelöst. Ein System, welches ein entsprechendes elektronisches Gerät einbezieht und eine besonders vorteilhafte Nutzung eines solchen Geräts ermöglicht, wird durch den ersten systembezogenen Anspruch charakterisiert. Vorteilhafte Aus- beziehungsweise Weiterbildungen der Erfindung sind durch die Unteransprüche gegeben.

Das zur Lösung der Aufgabe vorgeschlagene mobile elektronische Gerät mit Authentifizierungsfunktion zur Nutzung transaktionsbasierter Dienste besteht aus einer Steuereinrichtung, mindestens einem Benutzerinterface, einer NFC-Schnittstelle für die funkbasierte Nahbereichskommunikation (Near Field Communication) und ist mit einer als SIM-Karte (SIM = Subscriber Identity Module) ausgebildeten, der Identifikation in einem Mobilfunknetz dienenden UICC (Universal Integrated Circuit Card = Universelle Karte mit integrierten Schaltkreis, also Chip-Karte) ausgestattet. Das Gerät verfügt ferner über eine mit der SIM-Karte nutzbare Mobilfunksende- und Empfangseinheit oder ist zumindest mit einer solchen Mobilfunksende- und Empfangseinheit koppelbar. Erfindungsgemäß ist das Gerät so ausgebildet, dass auf der SIM-Karte beziehungsweise der UICC mehrere Anwendungen für transaktionsbasierte Dienste in Form von Programmanweisungen und zugehörigen Daten hinterlegbar sind. Hierbei handelt es sich um Anwendungen zur Nutzung unterschiedlicher transaktionsbasierter Dienste und/oder der Dienste unterschiedlicher Dienstanbieter. Auf der SIM-Karte des Geräts wird ferner eine Managementkomponente gehalten, welche die jeweils auf der SIM-Karte hinterlegten Anwendungen zur Nutzung der transaktionsbasierten Dienste verwaltet und einem Benutzer des Geräts, im Zusammenwirken mit einer von dessen Steuereinrichtung verarbeiteten Software, über das mindestens eine Benutzerinterface die Auswahl einer Anwendung zur Nutzung eines transaktionsbasierten Dienstes ermöglicht und darüber hinaus während einer unter Nutzung dieses Dienstes ausgeführten Transaktion die über die NFC-Schnittstelle erfolgende Kommunikation der jeweils ausgewählten Anwendung mit einer dafür ausgebildeten, die Transaktion mit Backendeinrichtungen des entsprechenden Dienstanbieters abwickelnden Einrichtung steuert.

Die Erfindung geht demnach von der Überlegung aus, eine auf einer Java-Card-Plattform und dem Global-Plattform-Standard basierende UICC beziehungsweise die entsprechend ausgebildete SIM-Karte eines für Mobilfunkanwendungen verwendbaren Geräts als Sicherheitselement für die Nutzung transaktionsbasierter, eine Authentifizierung erfordernder Dienste zu verwenden. Die Erfindung macht es sich zunutzte, dass die UICC eine multiapplikationsfähige Plattform ist und gleichzeitig eine Smartkarte, die eine sichere Aufbewahrung der darauf installierten Anwendungen in einzelnen "Sicherheitsdomänen" ermöglicht und über kryptografische Funktionen für die Verschlüsselung von im Rahmen der Dienstnutzung ausgeführten Transaktionen verfügt. Dabei dient dieses Sicherheitselement, also die SIM-Karte, gemäß der Erfindung gewissermaßen als Container für die einzelnen Anwendungen zur Nutzung der Dienst und für eine Managementkomponente zur Verwaltung der in diesem Container abgelegten Anwendungen und deren Verwendung für die Dienstnutzung. In dieser Eigenschaft werden auf dem Sicherheitselement respektive der UICC Programmanweisungen in der Art von Java-Applets und alle zur Ausführung der eine jeweilige Anwendung ausbildenden Programmanweisungen erforderlichen Daten sowie die im Zusammenhang mit der jeweiligen Transaktion sicherheitsrelevanten Daten, wie Berechtigungsnachweise und Zertifikate, gespeichert. Vermittels einer von der Steuereinrichtung des Geräts verarbeiteten Software, welche die auf der UICC gehaltene Managementkomponente einbindet, erhält der Benutzer des Geräts Zugriff auf die auf dessen UICC hinterlegten Anwendungen zur Dienstnutzung und kann die für eine Dienstnutzung jeweils zu verwendende Anwendung auswählen und über das mindestens eine Benutzerinterface mit dieser Anwendung interagieren. Die im Zusammenhang mit einer solchen Transaktion erfolgende Kommunikation wird im Hinblick auf die dazu erforderliche Interaktion mit der ausgewählten Anwendungen ebenfalls durch die auf der UICC gehaltene Managementkomponente gesteuert. Die physische Übertragung entsprechender Daten über die NFC-Schnittstelle des Gerätes (Endgerätes) und eine damit korrespondierende Schnittstelle einer entsprechend ausgestatteten Einrichtung, welche die jeweilige Transaktion im Zusammenwirken mit Backendeinrichtungen eines Dienstanbieters abwickelt, wird dabei endgeräteseitig durch die Steuereinrichtung des mobilen elektronischen Geräts bewerkstelligt.

Gemäß einer bevorzugten Ausbildungsform der Erfindung ist das mobile (End-) Gerät mit einer Bezahlfunktion für den bargeldlosen Zahlungsverkehr ausgestattet. Dabei werden auf dessen SIM-Karte Anwendungen in Form von Bezahlanwendungen für den bargeldlosen Zahlungsverkehr unter Verwendung unterschiedlicher Bezahlsysteme und/oder der Bezahlsysteme unterschiedlicher Zahlungsdienstleister gehalten. Wobei die entsprechenden Bezahlanwendungen selbstverständlich zusammen mit anderen Anwendungen für transaktionsbasierte Dienste auf der SIM-Karte abgelegt sein können. Die schon angesprochene Managementkomponente ermöglicht dabei einem Benutzer des Gerätes im Zusammenwirken mit einer von der Steuereinrichtung verarbeiteten Software die Auswahl einer für mindestens einen bargeldlosen Bezahlvorgang mittels des Geräts zu nutzenden Bezahlanwendung. Während eines solchen Bezahlvorgangs steuert sie die über die NFC-Schnittstelle erfolgende Kommunikation der ausgewählten Bezahlanwendung mit einer dafür ausgebildeten Kasseneinrichtung.

Vorzugsweise handelt es sich bei dem mobilen elektronischen Gerät mit Authentifizierungsfunktion um ein Mobiltelefon oder um ein Smartphone. Grundsätzlich denkbar ist aber auch die Realisierung auf einem PDA oder einem Kleinstcomputer, sofern dieser zumindest zur Kopplung mit einer Mobilfunksende- und Empfangseinheit eingerichtet ist und insoweit über eine entsprechende SIM-Karte beziehungsweise UICC verfügt.

Das erfindungsgemäße Gerät ist besonders vorteilhaft dadurch weitergebildet, dass die auf der SIM-Karte hinterlegten, für die Nutzung transaktionsbasierter Dienste verwendbaren Anwendungen auf einem graphischen Benutzerinterface des Gerätes als elektronische Brieftasche (Mobile Wallet beziehungsweise eWallet) animiert werden. Dabei werden die auf der UICC jeweils gehaltenen Anwendungen auf einem Display entsprechend graphisch symbolisiert. Die Anwendungen werden hier beispielsweise durch die graphische Darstellung von Chip- oder Kreditkarten unterschiedlicher Bezahlsysteme und/oder Zahlungsdienstleister beziehungsweise in Form von Karten sonstiger Dienstanbieter symbolisiert und können hier von dem Benutzer des Geräts ausgewählt werden. Sofern es sich bei dem Display um ein berührungsempfindliches Display handelt, kann die Auswahl der jeweiligen Anwendung beispielsweise durch Antippen des Displays und der darauf für ein Bezahlsystem, einen Zahlungsdienstleister oder einen sonstigen Dienstanbieter dargestellten Symbole erfolgen. Andernfalls erfolgt die Auswahl mittels eines anderen, mit dem Display des graphischen Benutzerinterfaces interagierenden Benutzerinterfaces, wie einer Tastatur, einem Sprachinterface, einem Joystick oder einem sonstigen Zeigeinstrument. Die animierte elektronische Brieftasche kann vorzugsweise, unabhängig von sonstigen durch das Gerät bereitgestellten Anwendungen und Funktionen, durch ein Passwort oder eine PIN gegen Missbrauch gesichert werden. Für eine Verwendung der Brieftasche beziehungsweise der Wallet bedarf es dann einer Authentifizierung durch den jeweiligen Benutzer. Nach erfolgreicher Authentifizierung sind für den Benutzer alle in der Wallet enthaltenen "Karten", respektive Anwendungen zur Nutzung von Diensten, beispielsweise im Rahmen des bargeldlosen Zahlungsverkehrs, gewissermaßen freigeschaltet.

Im Hinblick auf die Auswahl einer für einen bargeldlosen Bezahlvorgang zu verwendenden Anwendung werden durch das erfindungsgemäße Gerät vorzugsweise unterschiedliche Möglichkeiten unterstützt. Entsprechend einer dieser Möglichkeiten ist es vorgesehen, dass unter Nutzung des mindestens einen Benutzerinterfaces eine der auf der SIM-Karte hinterlegten Bezahlanwendungen als Standardbezahlanwendung oder gewissermaßen Defaulteinstellung für bargeldlose Bezahlvorgänge auswählbar ist und diese Standardbezahlanwendung bis zur Änderung der getroffenen Auswahl automatisch für jeden mit dem Gerät getätigten Bezahlvorgang verwendet wird, sofern sie von der für die Bezahlung genutzten Kasseneinrichtung beziehungsweise am jeweiligen POS akzeptiert wird. Eine andere Möglichkeit besteht darin, dass unter Nutzung des Benutzerinterfaces eine Bezahlanwendung jeweils für den aktuell durchzuführenden bargeldlosen Bezahlvorgang ausgewählt wird. Selbstverständlich ist darüber hinaus die Kombination beider Möglichkeiten denkbar, wobei dabei gegebenenfalls eine für einen bestimmten (aktuellen) Bezahlvorgang getroffene Auswahl von der Defaulteinstellung abweichen kann. Der Benutzer bestimmt dabei bei der Einleitung eines Bezahlvorgangs ob die Defaulteinstellung, das heißt die für den bargeldlosen Zahlungsverkehr eingestellte Standardbezahlanwendung verwendet oder eine nur für den betreffenden Bezahlvorgang gültige Auswahl einer anderen Bezahlanwendung getroffen werden soll.

Die zur Nutzung transaktionsbasierter Dienste nutzbaren Anwendungen, wie beispielsweise Bezahlanwendungen können zum Beispiel durch einen die jeweilige in dem Gerät verwendete SIM-Karte ausgebenden Mobilfunkbetreiber bereits im Zuge der Herstellung beziehungsweise der Konfiguration der SIM-Karte implementiert werden. Entsprechend einer wesentlich flexibleren und daher besonders vorteilhaften Ausbildungsform ist es jedoch vorgesehen, dass die Anwendungen zur Nutzung transaktionsbasierter Dienste über eine Mobilfunkverbindung auf die SIM-Karte übertragbar sind, so dass die elektronische Brieftasche gewissermaßen im Hinblick auf die in ihr mitgeführten Chip- beziehungsweise Kreditkarten oder sonstigen Karten flexibel ausgestattet werden kann.

Dementsprechend ist Bestandteil der Erfindung ein System zur Bereitstellung und Nutzung transaktionsbasierter Dienste mit einem in der vorgenannten Weise ausgebildeten elektronischen Gerät, mit jeweils mindestens einen Dienst bereitstellenden Backendeinrichtungen verschiedener Dienstanbieter, mit computerbasierten Einrichtungen zur Nutzung mindestens eines transaktionsbasierten Dienstes mittels des erfindungsgemäßen Gerätes, welche für die Kommunikation mit diesem Gerät ebenfalls über eine NFC-Schnittstelle verfügen und zur Abwicklung von Transaktionen im Zusammenwirken mit Backendeinrichtungen mindestens eines Dienstanbieters ausgebildet sind, und mit einem WAN, nämlich einem Netzwerk für den Datenaustausch zwischen den Einrichtungen zur Dienstnutzung und den Backendeinrichtungen der Dienstanbieter. Erfindungsgemäß sind in das System außerdem elektronische Einrichtungen mindestens eines Mobilfunknetzbetreibers eingebunden. Dabei sind die genannten elektronischen Einrichtungen des Mobilfunknetzbetreibers derart ausgebildet, dass mit ihrer Hilfe Anwendungen zur Nutzung unterschiedlicher transaktionsbasierter Dienste und/oder der Dienste unterschiedlicher Dienstanbieter auf die SIM-Karte eines erfindungsgemäßen mobilen Geräts übertragen werden können.

Entsprechend dem bevorzugten Einsatzbereich der Erfindung handelt es sich bei dem in das erfindungsgemäße System einbezogenen (End-) Gerät um ein Gerät mit Bezahlfunktion im bargeldlosen Zahlungsverkehr. Dabei sind mindestens einige der Einrichtungen, welche eine jeweilige Transaktion bei der Nutzung eines Dienstes im Zusammenwirken mit den Backendeinrichtungen des entsprechenden Dienstanbieters (beziehungsweise Zahlungsdienstleisters) abwickeln, als Kasseneinrichtung ausgebildet.

Vorzugsweise ist diese Systemarchitektur noch dadurch weitergebildet, dass die vorgenannten elektronischen Einrichtungen des Mobilfunkanbieters außerdem Mittel zur Speicherung und Verwaltung mehrerer zur Nutzung transaktionsbasierter Dienste mittels eines erfindungsgemäß ausgebildeten (End-) Gerätes verwendbarer Anwendungen (Programmanweisungen und zugehörige Daten) aufweisen. Darüber hinaus sind sie ferner mit Mitteln ausgestattet, welche die Auswahl von auf die SIM-Karte eines mobilen elektronischen Geräts mit Authentifizierungsfunktion zu übertragenden Anwendungen bei einer bestehenden Mobilfunkverbindung zwischen dem betreffenden Gerät und diesen Mitteln ermöglichen. Hierdurch ist es dem Nutzer des Systems möglich, beispielsweise vor einer Reise oder einer Einkaufstour festzulegen, welche Chip- beziehungsweise Kreditkarten oder sonstigen Karten zur Dienstnutzung (im bildlich gesprochenen Sinne, das heißt im Hinblick auf die auf seinem Gerät gehaltenen entsprechend animierten Anwendungen) er mitnehmen möchte und welche er - etwa aus Sicherheitsgründen - gewissermaßen im Depot, also auf den Einrichtungen des Mobilfunkbetreibers belässt. Anhand der Zeichnungen, welche Teile eines Ausführungsbeispiels in schematischer Darstellung zeigen, sollen nochmals einige Aspekte der Erfindung erläutert werden. Dabei bezieht sich das Ausführungsbeispiel auf den bargeldlosen Zahlungsverkehr und entsprechende Bezahlsysteme als mögliche Formen transaktionsbasierter Dienste im Sinne der Erfindung. Die Zeichnungen zeigen im Einzelnen:
- Fig. 1:: die schematische Darstellung einer Architektur für die SIM-Kartenbasierte Animation einer elektronischen Brieftasche für den bargeldlosen Zahlungsverkehr,
- Fig. 2a, b:: eine erste Möglichkeit des Ablaufs der Kommunikation zwischen einem erfindungsgemäßen mobilen Gerät mit einer Bezahlfunktion und einer Kasseneinrichtung am Point-of-Sale bei der Einleitung eines bargeldlosen Bezahlvorgangs,
- Fig. 3a, b:: eine weitere Möglichkeit des Ablaufs der Kommunikation zwischen dem erfindungsgemäßen Gerät und einer Kasseneinrichtung bei der Einleitung eines Bezahlvorgangs.

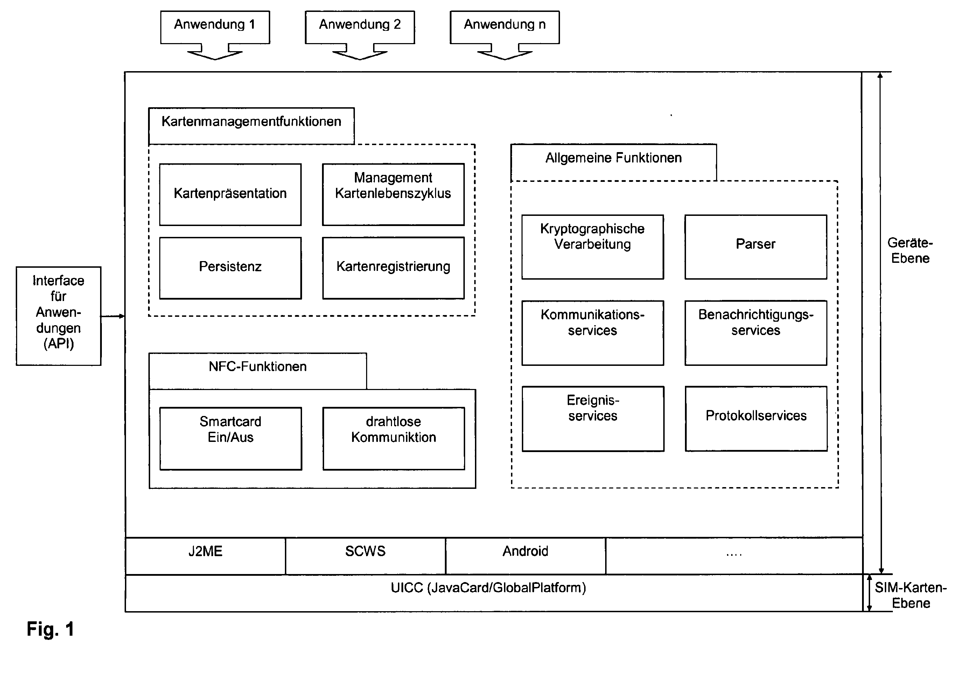

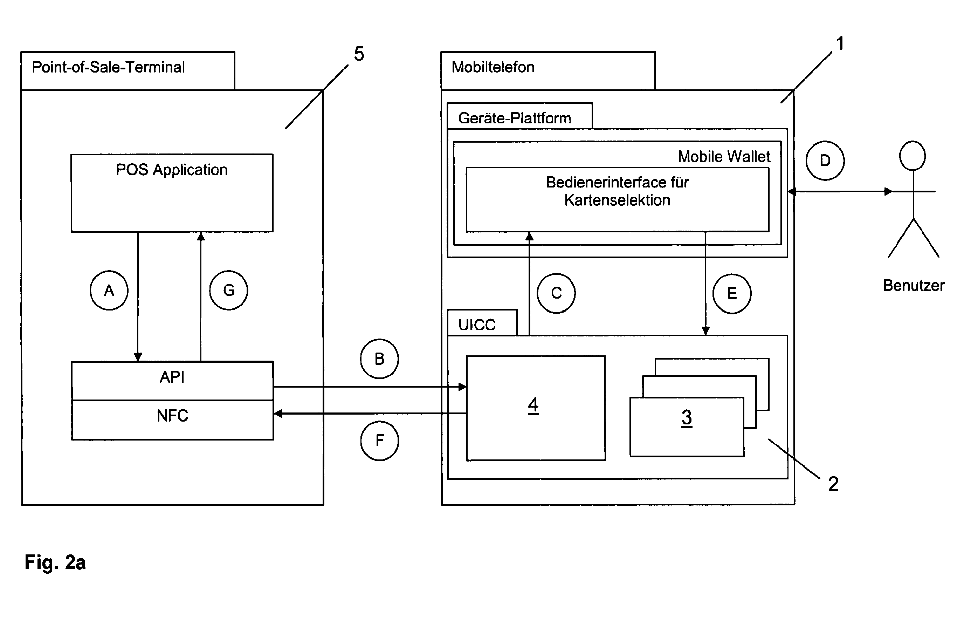

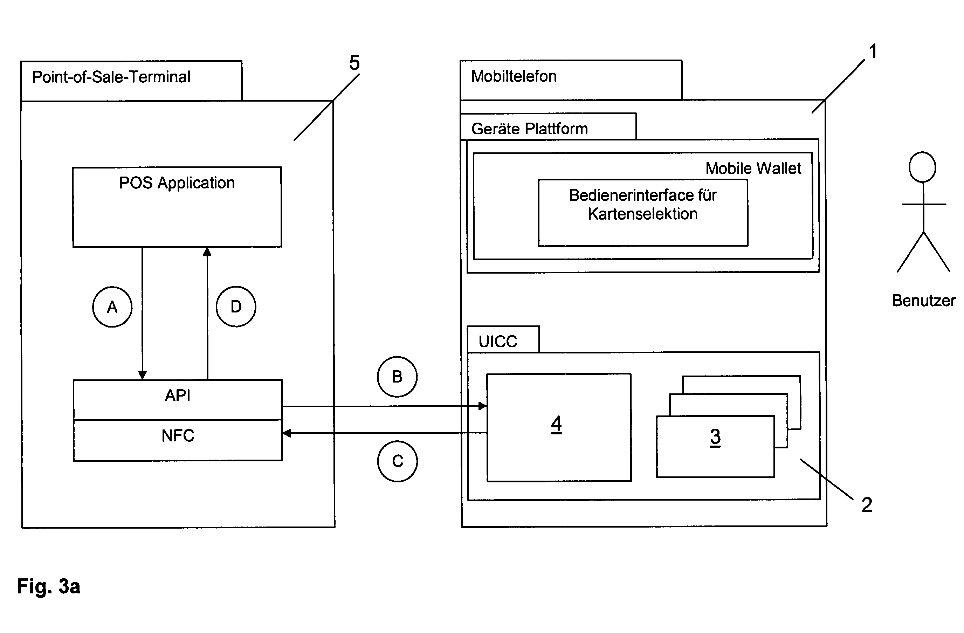

Die Fig. 1 zeigt die schematische Darstellung einer möglichen Architektur für die SIM-Karten-basierte Animation einer elektronischen Brieftasche in einem mobilen Gerät 1 (siehe Fig. 2a, Fig. 3a) entsprechend der Erfindung. Grundkomponente der Architektur ist eine UICC beziehungsweise eine SIM-Karte 2, welche auf einer Java-Card-Plattform und dem Global-Plattform-Standard basiert. Die entsprechende SIM-Karte 2 dient als Container für vorzugsweise mehrere Bezahlanwendungen 3 des bargeldlosen Zahlungsverkehrs und für eine Managementkomponente 4 zur Verwaltung dieser Bezahlanwendungen 3 (siehe hierzu Fig. 2a beziehungsweise Fig. 3a). Die weiteren im Gerät 1 selbst, durch die Steuereinrichtung und eine von der Steuereinrichtung verarbeitete Software realisierten Komponenten können auf unterschiedliche, von dem betreffenden Gerät 1 unterstützte Plattformen, wie insbesondere eine Java-Plattform (J2ME), einen Smart-Card-Web-Server (SCWS) oder eine Android-Plattform, aufgesetzt sein. Bei einer dieser auf Gerätebene bereitgestellten Komponenten handelt es sich um eine Komponente mit Card-Management-Funktionen. Solche Funktionen betreffen unter anderem die Registrierung der auf der UICC beziehungsweise der SIM-Karte 2 hinterlegten "Karten", das heißt Anwendungen 3 beziehungsweise, gemäß dem Beispiel, Bezahlanwendungen für transaktionsbasierte Bezahlvorgänge des bargeldlosen Zahlungsverkehrs und die im Zusammenwirken mit der Managementkomponente 4 der UICC erfolgende Präsentation der auf der SIM-Karte 2 hinterlegten Bezahlanwendungen 3 in Form einer Animation der "Karten" auf einem hier nicht dargestellten Display, beziehungsweise graphischen Benutzerinterface. Eine weitere Komponente der elektronischen Brieftasche dient der Bereitstellung allgemeiner Funktionen, wie der Verschlüsselung und der Analyse (Parsing) von Benutzereingaben sowie deren Umwandlung in ein den Zugriff auf die von der UICC gehaltenen Bezahlanwendungen ermöglichendes Format. Weitere Funktionen dieser Komponente betreffen die Ausgabe von Nachrichten an den Benutzer und die generelle Kommunikation mit dem Benutzer sowie die Führung von Protokolldateien. Eine dritte Komponente dient der Bereitstellung von Funktionen für die drahtlose Nachbereichskommunikation und zur, wiederum im Zusammenwirken mit der Steuereinrichtung des Gerätes erfolgenden Steuerung der funkgestützten NFC-Schnittstelle bei einem Datenaustausch zwischen dem erfindungsgemäßen Gerät 1 und einer Kasseneinrichtung 5 beziehungsweise einem Kassenterminal.

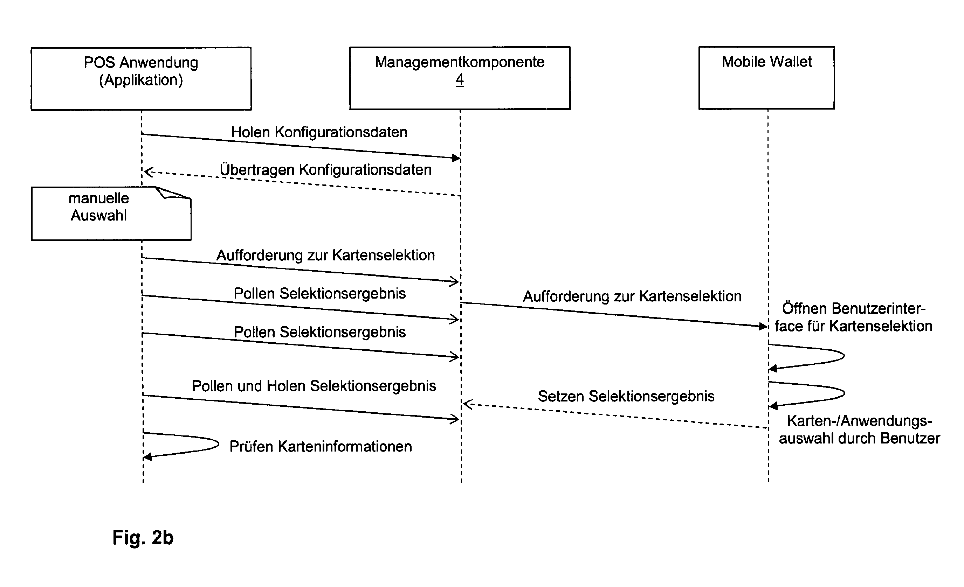

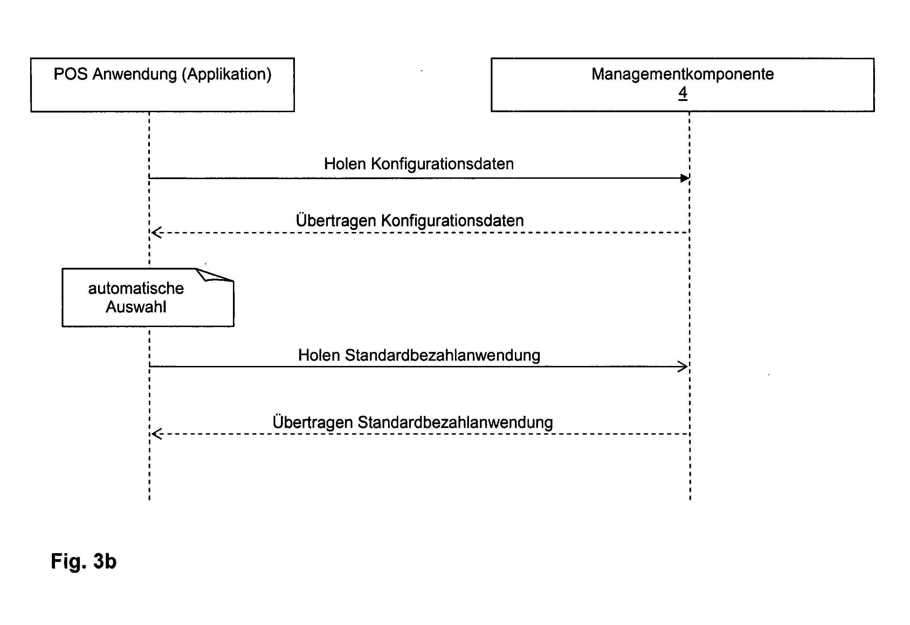

Die Auswahl für bargeldlose Bezahlvorgänge zu verwendender Bezahlanwendungen aus den auf der SIM-Karte 2 gespeicherten Anwendungen 3 erfolgt durch den Benutzer des Geräts 1. Bei der hier erläuterten vorteilhaften Ausbildungsform stehen hierfür zwei grundsätzliche Auswahlmodi zur Verfügung. Entsprechend einem ersten durch die Figuren 2a und 2b verdeutlichten Auswahlmodus erfolgt die Auswahl durch einen Benutzer manuell jeweils im Zusammenhang mit der Einleitung eines Bezahlvorgangs. Gemäß der zweiten Möglichkeit, welche in den Figuren 3a und 3b veranschaulicht ist, arbeitet das Gerät 1 im Modus einer automatischen Kartenselektion. Hierbei wählt der Benutzer unabhängig von einem aktuellen Bezahlvorgang eine von der elektronischen Brieftasche durch die Karte eines entsprechenden Bezahlsystembetreibers animierte Bezahlanwendung 3 aus, welche bis zur Änderung dieser Auswahl automatisch für jede mittels des erfindungsgemäßen mobilen Geräts ausgeführten Bezahlvorgang verwendet wird, sofern die betreffende Bezahlanwendung 3 von der Kasseneinrichtung 5 am POS akzeptiert wird.

Die manuelle Kartenauswahl beziehungsweise Kartenselektion, das heißt die Auswahl einer für einen jeweiligen aktuellen Bezahlvorgang zu verwendenden Bezahlanwendung, vollzieht sich mit Bezug auf die Fig. 2a wie folgt:
a.) Eine POS-Anwendung der Kasseneinrichtung 5 am Point-of-Sale (POS) fragt bei der auf der UICC beziehungsweise SIM-Karte 2 gehaltenen Managementkomponente 4 zur Auswahl und Konfiguration der Bezahlanwendungen 3 über die NFC-Schnittstelle der Kasseneinrichtung 5 an, welcher Kartenselektionsmodus in der Wallet konfiguriert ist
b.) Aufgrund des aktivierten manuellen Kartenselektionsmodus schickt die POS-Anwendung eine Aufforderung zur Kartenselektion an die Managementkomponente 4 ((A) und (B))
c.) Die Managementkomponente 4 leitet diese Aufforderung zur Kartenselektion an die Steuereinrichtung des Gerätes 1 (vorzugsweise ein Handy) weiter (C)
d.) Die mit einer zugehörigen Software ein so genanntes Wallet-Framework ausbildende Steuereinrichtung eröffnet über die Komponente Anwendungsauswahl-Benutzerinterface eine Benutzeroberfläche zur Animation aller in der Wallet, also auf der UICC beziehungsweise der SIM-Karte 2 des Gerätes 1 hinterlegten beziehungsweise installierten Bezahlanwendung 3 in Form für den Nutzer zur Auswahl stehender "Karten"
e.) Der Nutzer wählt eine gewünschte Karte, respektive Bezahlanwendung 3 für den aktuellen, transaktionsbasierten Bezahlvorgang aus
f.) Das Ergebnis der Kartenselektion durch den Nutzer wird der Managementkomponente 4 mitgeteilt (E)
g.) Die Managementkomponente 4 stellt dann die selektierte Karte beziehungsweise Bezahlanwendung über die NFC-Schnittstelle der POS-Anwendung zur Verfügung (G) - der Kartenselektionsprozess ist beendet.

Der vorstehend erläuterte Ablauf ist in der zugehörigen Fig. 2b nochmals in der Form eines Graphen dargestellt.

Demgegenüber gestaltet sich die automatische Kartenselektion mit Bezug auf die Fig. 3a wie folgt:
a.) Die POS-Anwendung der Kasseneinrichtung 5 am Point-of-Sale fragt bei der auf der UICC 2 gehaltenen Managementkomponente 4 zur Auswahl und Konfiguration der Bezahlanwendungen 3 über die NFC-Schnittstelle der Kasseneinrichtung 5 an, welcher Kartenselektionsmodus in der Wallet konfiguriert ist
b.) Aufgrund des aktivierten automatischen Kartenselektionsmoduls fordert die POS-Anwendung über die NFC-Schnittstelle von der Managementkomponente 4 die vom Nutzer voreingestellte Karte an ((A) und (B))
c.) Die Managementkomponente 4 stellt die vom Nutzer voreingestellte "Karte", respektive Bezahlanwendung über die NFC-Schnittstelle der POS-Anwendung zur Verfügung ((C), (D)). Der Kartenselektionsprozess ist beendet.

Auch dieser Ablauf ist nochmals in Form eines Graphen dargestellt, welchen die Fig. 3b zeigt.

### Liste der Bezugszeichen

- 1: Gerät mit Authentifizierungsfunktion
- 2: SIM-Karte beziehungsweise UICC
- 3: Anwendung, zum Beispiel Bezahlanwendung
- 4: Managementkomponente
- 5: Einrichtung, zum Beispiel Kasseneinrichtung

## Patentansprüche

1. Mobiles elektronisches Gerät (1) mit Authentifizierungsfunktion zur Nutzung transaktionsbasierter Dienste, welches eine Steuereinrichtung, mindestens ein Benutzerinterface, Mittel für die funkbasierte Nahbereichskommunikation einschließlich einer NFC-Schnittstelle und eine als SIM-Karte (2) ausgebildete, der Identifikation in einem Mobilfunknetz dienende UICC aufweist und welches über eine mit der SIM-Karte (2) nutzbare Mobilfunksende- und Empfangseinheit verfügt oder mit einer solchen Mobilfunksende- und Empfangseinheit koppelbar ist, **dadurch gekennzeichnet, dass** auf der SIM-Karte (2) mehrere Anwendungen (3), nämlich Programmanweisungen und zugehörige Daten, zur Nutzung unterschiedlicher transaktionsbasierter Dienste und/oder der Dienste unterschiedlicher Dienstanbieter hinterlegbar sind und dass die jeweils auf der SIM-Karte (2) hinterlegten Anwendungen (3) zur Nutzung transaktionsbasierter Dienste durch eine ebenfalls auf der SIM-Karte (2) gehaltene Managementkomponente (4) verwaltet werden, welche im Zusammenwirken mit einer von der Steuereinrichtung verarbeiteten Software einem Benutzer des Gerätes (1) über das mindestens eine Benutzerinterface die Auswahl einer Anwendung (3) zur Nutzung eines transaktionsbasierten Dienstes ermöglicht und während einer unter Nutzung dieses Dienstes ausgeführten Transaktion die über die NFC-Schnittstelle erfolgende Kommunikation der ausgewählten Anwendung (3) mit einer dafür ausgebildeten, die Transaktion mit Backendeinrichtungen des entsprechenden Dienstanbieters abwickelnden Einrichtung (5) steuert.

2. Gerät (1) nach Anspruch 1, **dadurch gekennzeichnet, dass** das Gerät (1) mit einer Bezahlfunktion für den bargeldlosen Zahlungsverkehr ausgestattet ist, wobei auf dessen SIM-Karte (2) Anwendungen (3) in Form von Bezahlanwendungen für den bargeldlosen Zahlungsverkehr unter Verwendung unterschiedlicher Bezahlsysteme und/oder der Bezahlsysteme unterschiedlicher Zahlungsdienstleister gehalten werden und wobei die Managementkomponente (4) einem Benutzer des Gerätes im Zusammenwirken mit einer von der Steuereinrichtung verarbeiteten Software über das mindestens eine Benutzerinterface die Auswahl einer für mindestens einen bargeldlosen Bezahlvorgang mittels des Geräts (1) zu nutzenden Bezahlanwendung (3) ermöglicht und während eines solchen Bezahlvorgangs die über die NFC-Schnittstelle erfolgende Kommunikation der ausgewählten Bezahlanwendung (3) mit einer dafür ausgebildeten Kasseneinrichtung steuert.

3. Gerät (1) nach Anspruch 1 oder 2, **dadurch gekennzeichnet, dass** dieses als ein Mobiltelefon oder als ein Smartphone ausgebildet ist.

4. Gerät (1) nach einem der Ansprüche 1 bis 3, **dadurch gekennzeichnet, dass** die auf der SIM-Karte (2) hinterlegten, für die Nutzung transaktionsbasierter Dienste auswählbaren Anwendungen (3) auf einem graphischen Benutzerinterface des Gerätes (1) als elektronische Brieftasche animiert werden, wobei eine zur Nutzung eines entsprechenden Dienstes zu verwendende, auf einem Display eines graphischen Benutzerinterfaces graphisch symbolisierte Anwendung (3), durch Antippen des gegebenenfalls berührungsempfindlich ausgebildeten Displays oder mittels eines anderen, mit dem Display des graphischen Benutzerinterfaces interagierenden Benutzerinterfaces des Gerätes (1) auswählbar ist.

5. Gerät (1) mit Bezahlfunktion nach Anspruch 4, **dadurch gekennzeichnet, dass** die von diesem animierte elektronische Brieftasche unabhängig von sonstigen durch das Gerät (1) bereitgestellten Anwendungen und Funktionen durch ein Password oder eine PIN sicherbar ist, so dass ihre Verwendung zunächst einer Authentifizierung des jeweiligen Benutzers gegenüber der elektronischen Brieftasche bedarf.

6. Gerät (1) mit Bezahlfunktion nach einem der Ansprüche 2 bis 5, **dadurch gekennzeichnet, dass** mittels des mindestens einen Benutzerinterfaces eine der auf der SIM-Karte (2) hinterlegten Anwendungen (3) als Standardbezahlanwendung auswählbar ist, welche bis zu einer Änderung dieser Auswahl automatisch für jeden mit dem Gerät (1) getätigten Bezahlvorgang verwendet wird.

7. Gerät (1) mit Bezahlfunktion nach einem der Ansprüche 2 bis 6, **dadurch gekennzeichnet, dass** mittels des mindestens einen Benutzerinterfaces eine der auf der SIM-Karte (2) hinterlegten Anwendungen (3) als Bezahlanwendung für einen aktuell durchzuführenden bargeldlosen Bezahlvorgang auswählbar ist.

8. Gerät (1) nach einem der Ansprüche 1 bis 7, **dadurch gekennzeichnet, dass** die Anwendungen (3) zur Nutzung transaktionsbasierter Dienste über eine Mobilfunkverbindung auf die SIM-Karte (2) des Geräts (1) übertragbar sind.

9. System zur Bereitstellung und Nutzung transaktionsbasierter Dienste mit einem mit einer NFC-Schnittstelle ausgestatteten mobilen elektronischen Gerät (1) nach Anspruch 8, mit jeweils mindestens einen transaktionsbasierten Dienst bereitstellenden Backendeinrichtungen verschiedener Dienstanbieter, mit computerbasierten Einrichtungen (5) zur Nutzung mindestens eines transaktionsbasierten Dienstes mittels des Gerätes (1), welche für die Kommunikation mit dem Gerät (1) bei der Dienstnutzung ebenfalls über eine NFC-Schnittstelle verfügen und zur Abwicklung von Transaktionen im Zusammenwirken mit Backendeinrichtungen mindestens eines Dienstanbieters ausgebildet sind, und mit einem WAN, nämlich einem Netzwerk für den Datenaustausch zwischen den Einrichtungen (5) und den Backendeinrichtungen der Dienstanbieter, **dadurch gekennzeichnet, dass** in das System elektronische Einrichtungen mindestens eines Mobilfunknetzbetreibers eingebunden sind, mittels welcher Anwendungen (3) zur Nutzung unterschiedlicher transaktionsbasierter Dienste und/oder der Dienste unterschiedlicher Dienstanbieter auf die SIM-Karte (2) des mobilen Geräts (1) übertragbar sind.

10. System nach Anspruch 9, **dadurch gekennzeichnet, dass** es sich bei dem Gerät (1) um ein Gerät mit Bezahlfunktion im bargeldlosen Zahlungsverkehr handelt und mindestens einige der Einrichtungen (5) als Kasseneinrichtung zur Abwicklung bargeldloser Bezahlvorgänge mit Backendeinrichtungen mindestens eines Zahlungsdienstleisters ausgebildet sind.

11. System nach Anspruch 9 oder 10, **dadurch gekennzeichnet, dass** die in dieses einbezogenen elektronischen Einrichtungen des mindestens einen Mobilfunkanbieters Mittel zur Speicherung und Verwaltung mehrerer durch einen Benutzer des mobilen elektronischen Geräts (1) verwendbarer Anwendungen (3) zur Nutzung transaktionsbasierter Dienste und Mittel zur Auswahl von den elektronischen Einrichtungen des Mobilfunkbetreibers auf die SIM-Karte (2) des mobilen elektronischen Geräts (1) zu übertragender Anwendungen (3) aufweisen.
